# EUROPEAN PATENT APPLICATION

(11) **EP 1 118 537 A2**
(43) Date of publication of application: **25.07.2001**
(21) Application number: 01101090.7
(22) Date of filing: 18.01.2001
(51) Int. Cl.: B64D 11/04

(54) **Galley unit for aircraft**

(30) Priority: 20.01.2000 JP 2000011917
(71) Applicant: JAMCO CORPORATION, Mitaka, Tokyo (JP)
(72) Inventor: Kasuya, Toshihisa, c/o Jamco Corporation, Tokyo (JP)
(74) Representative: TER MEER STEINMEISTER & PARTNER GbR

(57) **Abstract**

A galley unit 10 for an aircraft is equipped with a utility mechanism (a counter equipment 20 and 200, a decorating wall 131B, and a cabinet 60) provided to at least one wall surface of a box body (closet) 13B, and a cover body (door member 30, cover member 70) with at least its outer wall surfaces made of a special fireproof material. The cover bodies 30 and 70 are construed so as to be movable between a first position for covering the wall surface provided with said utility mechanism, and a second position for opening the wall surface. When the cover bodies are in the first position, outer wall surfaces of the galley unit are all construed from special fireproof material, and the counters 20 and 200 are folded and stored to the side wall surface, and decorators are stored inside the storage space inside the box body. The cover bodies 30 and 70 could be folded, and when the cover bodies are in the second position of being folded and stored to the side wall surface of the box body, the counters 20, 200 or cabinet 60 are moved and placed on the side wall surface.

## Description

### FIELD OF THE INVENTION

The present invention concerns a galley (kitchen) facility provided inside an aircraft.

### DESCRIPTION OF THE RELATED ART

For materials used for interior decorations in an aircraft, there are defined requirements on flame-retardant ability, fuming ability and the like, that is, a fireproof regulation. Moreover, for aircrafts carrying passengers of 20 or more, it is defined in a flightworty examination procedure that materials satisfying a special fireproof requisite must be used for linings for ceilings and side walls, and outer shell of lavatories and the like that are exposed to inner side of a cabin at least during takeoff and landing.

As one of the requirements in this special requirement regulation, there is provided a combustion characteristic in order to prevent occurrence of fire in case of an aircrash and the like.

This is a regulation concerning limits on peak heat value and total heat value when heat energy is applied to a material. Under this regulation, the peak heat value must be 65 Kw/m² or less, and total heat value must be 65 Kw·min/m² or less.

This condition is applied to outer walls of a galley unit provided inside an aircraft, for example.

In a conventional galley unit, fireproof materials satisfying the fireproof requirements for general interior decorations are used for interior decorations, but materials satisfying the above-mentioned special fireproof regulation are used for wall surfaces facing the cabin. The fireproof requirements for general interior decorations are mild so that wide variety of materials could be used, therefore decorating effect and the like could be achieved. However, there are not so many materials satisfying the special fireproof requirement.

On the other hand, there are provided passenger seats, lavatory units, galley units and the like arranged in the small closed space inside an aircraft without any elbowroom left. Recently, with developments of engines or the like, aircrafts could fly for a longer period of time, so that demand for a utility space is increasing among users.

However, arranging an independent utility equipment inside such limited space inside an aircraft leads to disadvantages such as decrease in passenger seat space, increase in total weight and the like, so that passengers were unable to receive a satisfactory service.

### SUMMARY OF THE INVENTION

The present invention aims to provide a utility space without reducing the space for passenger seats in an aircraft, by providing utility function to a galley unit.

The galley unit for an aircraft according to the present invention is equipped with a utility mechanism provided at least to one wall surface of a box body, and a cover body made of material satisfying the special fireproof requirement (hereinafter referred to as special fireproof material) at least at outer wall surfaces thereof, wherein the cover body is composed so as to be movable between a first position for covering the wall provided with the utility mechanism and a second position opening the wall surface, so that all of the outer wall surfaces of the galley unit are composed of special fireproof material when the cover body is located in the first position.

Also, the utility mechanism is a counter equipment, a decorative wall, and a decorative member or the like consisting of a general fireproof material, and when the cover body is in the first position, the counter equipment is folded and stored to the side wall surface, and the decorating member is stored inside the storage space inside the box body.

The cover body is composed so as to be foldable, and when the cover body is in the second position of being folded and stored to a side wall surface on said box body side, the counter equipment or the decorating member is moved and arranged in a ready position.

### BRIEF DESCRIPTION OF THE DRAWINGS

FIG. 1 is an overall perspective view of the galley unit according to the present invention;
FIG. 2 is an overall perspective view of the galley unit according to the present invention provided with a utility function;
FIG. 3 is a partial perspective view of the side surface of the galley unit;
FIG. 4 is an explanatory view of formation into the first utility space;
FIG. 5 is an explanatory view of formation into the first utility space;
FIG. 6 is a perspective view of the first utility space;
FIG. 7 is an upper view of the first utility space;
FIG. 8 is a cross-sectional view taken along line M-M in FIG. 3;
FIG. 9 is an explanatory view of the front side of the galley unit;
FIG. 10 is an explanatory view of formation into the second utility space;
FIG. 11 is an explanatory view of formation into the second utility space; and
FIG. 12 is a perspective view of the second utility space.

### DETAILED DESCRIPTION OF PREFERRED EMBODIMENTS

The mode for carrying out the present invention will be explained referring to the drawings.

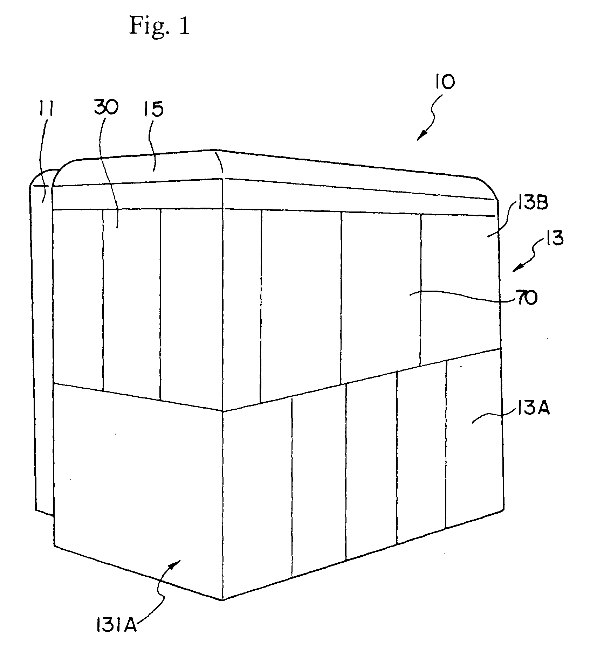

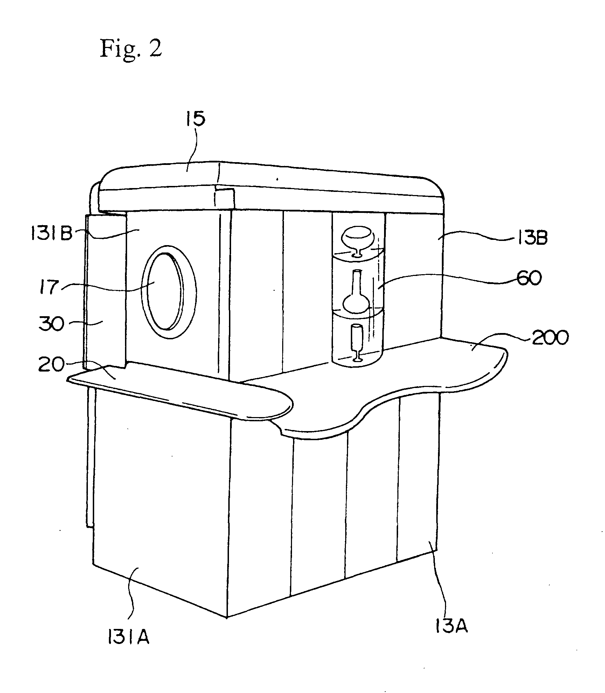

FIG. 1 is a perspective view of a galley unit according to the present invention, and FIG. 2 is a perspective view of a galley unit provided with a utility function.

A galley unit 10 is comprised of a box body formed of a ceiling member 15 and side walls, and is equipped with a first closet (box body) 11 for storing etceteras, and a second closet (box body) 13 provided back to back with the first closet 11.

The outer walls of the first closet 11 are all comprised of a special fireproof material satisfying the fireproof requirement during takeoff and landing of an aircraft. For example, the special fireproof material used herein is a composite material using phenol resin (honeycomb panel) or the like.

The second closet 13 has a lower closet 13A for storing a service cart, food and the like to the lower portion thereof, and an upper closet 13B having a compartmented space for storing dishes and the like through a counter 13C.

The ceiling 15 is made of special fireproof material at least at the outer wall surfaces thereof. Also, an eaves portion 151 is projected toward the second closet 13.

One side surface of the upper closet 13B is covered with a door member 30, and the front surface thereof is covered with a cover member 70. The outer wall surface of the door member 30, and the outer wall surface of the cover member 70 are made of special fireproof material.

By opening the door member 30 and the cover member 70, the galley unit 10 having a first utility space equipped with a bar counter board 20, and a second utility space equipped with a bar counter board 200, a cabinet 60 or the like could be formed, as is shown in FIG. 2.

Next, an example of forming the first utility space will be explained.

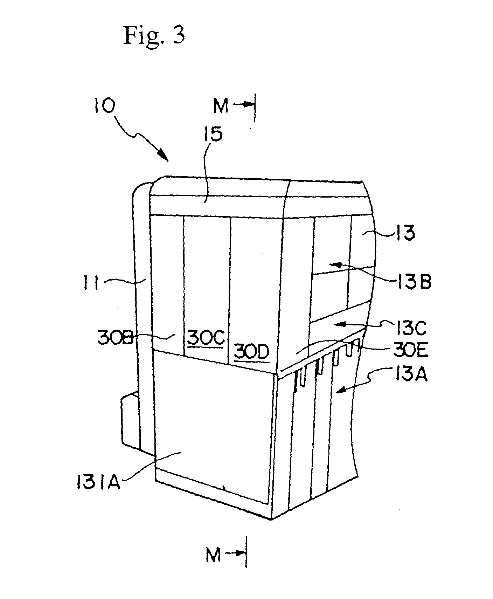

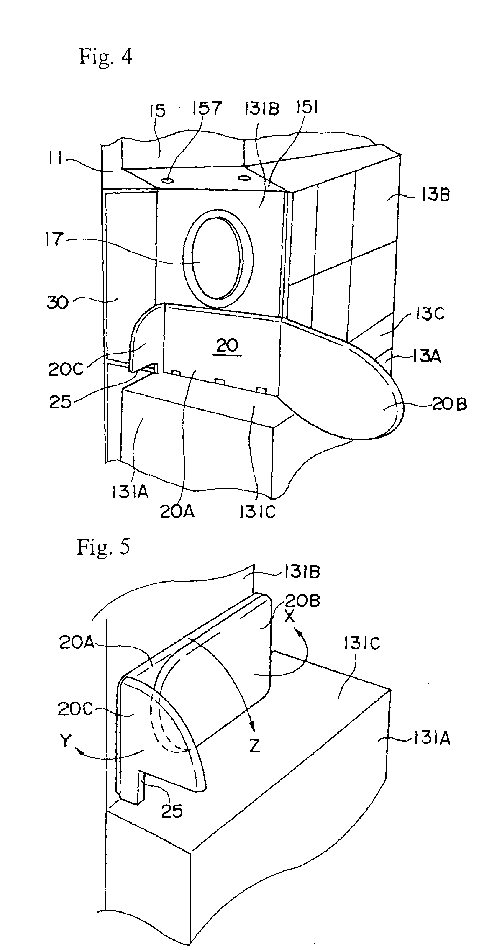

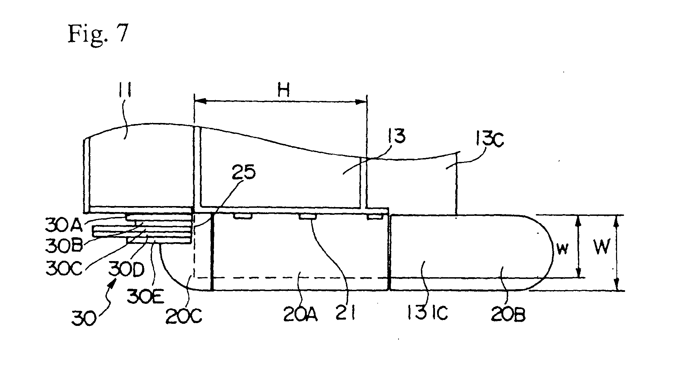

FIG. 3 is a perspective view of one side surface of the galley unit 10, and FIGS. 4 through 7 are explanatory view of the structure.

A side wall 131 of the second closet 13 is formed so that an lower side wall 131A of the lower closet 13A forms a projecting portion 131C projecting towards a side wall 131B of the upper closet 13B in approximately the same size as the eaves portion 151 (size w).

A lighting device 15 is mounted to the wall surface of the upper side wall 131B, and a lighting equipment 157 is mounted to the eaves portion 151 of the ceiling projecting from the side wall in order to illuminate downwardly.

The outer wall surfaces of the second closet 13 are made of special fireproof material, excluding one side wall surface 131B of the upper closet 13B.

Also, a counter board 20 is provided to the side wall 131 of the second closet 13.

The counter board 20 has a length size H equal to the width size of the side wall 131 of the second closet 13, and is equipped with a first counter board 20A having width size W slightly larger than the size w of the projecting portion 131C of the lower closet, a second counter board 20B connected so as to be foldable to one end of the first counter board 20A, and a third counter board 20C connected so as to be foldable to the other end of the first counter board 20A. One end edge of the first counter board 20A in length direction is mounted to the side wall 131B of the upper closet 13B so as to be rotatable with a fixture 21.

The counter board 20 thus construed could be stored rotatably along the side wall 131B as having approximately width size H of the side wall, by folding the second counter board 20B centering on the first counter board 20A on top of the first counter board 20A, and then folding and superimposing the third counter board 20C on top of the first counter board 20A. An ordinary fireproof material could be used on the side wall 131B and the counter board 20, so that decorating effect could be achieved.

Also, the second closet 13 is equipped with a door 30 for covering the side wall surface. The door 30 has the length to cover the whole surface of the side wall 131B of the upper closet of the second closet 13, such as the space between the eaves portion 151 of the ceiling 15 to the side wall 131A of the lower closet 13B, and has a first door 30A for covering the edge of the projecting portion 131C of the side wall 131A of the lower closet 13B, a second through fourth door 30B, 30C and 30D for covering the width direction of the side wall 131B, and a fifth door 30E for covering the other end surface of the projecting portion 131C of the lower closet 13B. The first door 30A through fifth door 30E has the composition of being connected so as to be foldable, and are folded and stored in parallel to the side wall of the first closet 11 when not in need (this position will be called the second position). The door 30 is made of a special fireproof material at least at outer walls thereof.

The use of the galley unit 10 thus construed will be explained below.

When the galley unit 10 is used as a utility space

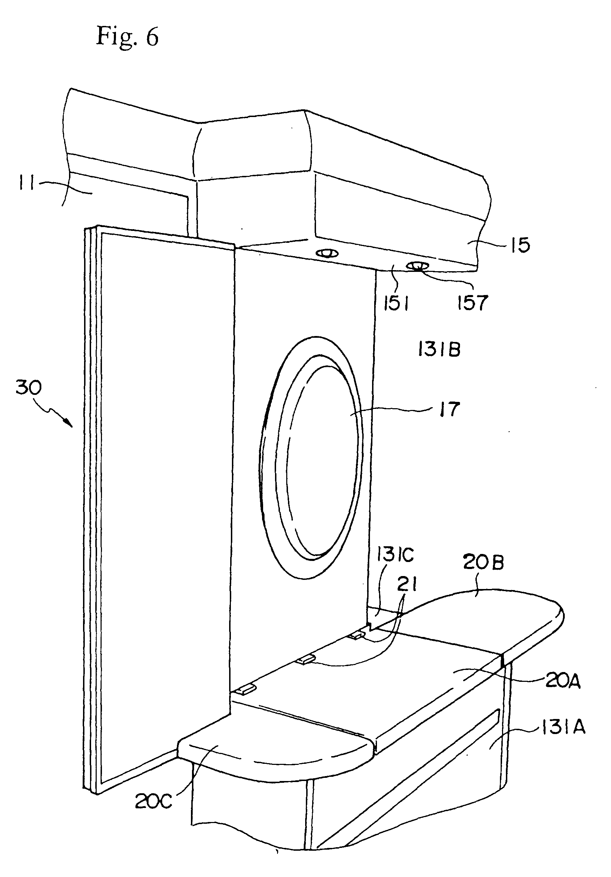

The door 30 is folded and stored in the second position, and the side wall 131B of the second closet 13 is exposed. Next, the second counter board 20B of the counter board 20 is opened in the arrow X direction, and the third counter board 30C is opened in the arrow Y direction so as to form one continuous counter board 20. Then, the counter board 20 is rotated in the arrow Z direction and rested on top of the projecting portion 131C of the lower closet 13B. By forming an concave portion 25 to the third counter board 20C as is shown in FIGS. 4 and 5, interference of the counter board 20 and the folded door 30 could be avoided.

By lighting the illumination 17 and the lighting equipment 157, a bright counter could be formed. Also, the time when the utility space becomes needed is during level flight when the fireproof requisite of an aircraft is not required, so that ordinary fireproof material having decorative effect could be used on side wall surface 131B and the counter board 20. Therefore, a mood as a utility space could be created.

During takeoff and landing

The counter board 20 is folded, rotated centering on the fixture 21, and stored to the side wall 131B of the upper closet. Then, the door 30 is closed so as to cover the space between the ceiling 15 and the side wall 131A of the lower closet (this condition of the door will be called the first position).

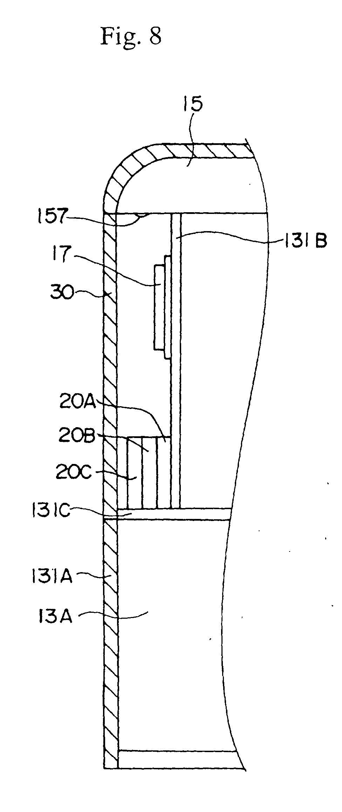

The outer surface of the door 30 is made of special fireproof material, so that when the door 30 is in the first position, all of the wall surfaces of the side surfaces of the galley unit 10 facing the cabin is covered by special fireproof material indicated by hatching, as is shown in FIG. 8.

As is seen from the example, the galley unit 10 forming the first utility space is covered at all the outer walls of the unit 10 with special fireproof material, when the special fireproof regulation is required for aircraft during takeoff and landing. In a condition where the special requirement during takeoff and landing is cleared, a utility space formed with a bar counter by opening and storing the door 30 in the second position, and opening the counter board 20 folded and stored could be obtained.

In the present embodiment, a counter board of three-fold shape is shown. However, the folding shape of the counter could be changed freely according to its length and its desired shape. Also, a folded style door is shown, but it could be an accordion type if the outer wall surface thereof is made of a special fireproof material.

Next, the example of forming the second utility space will be explained.

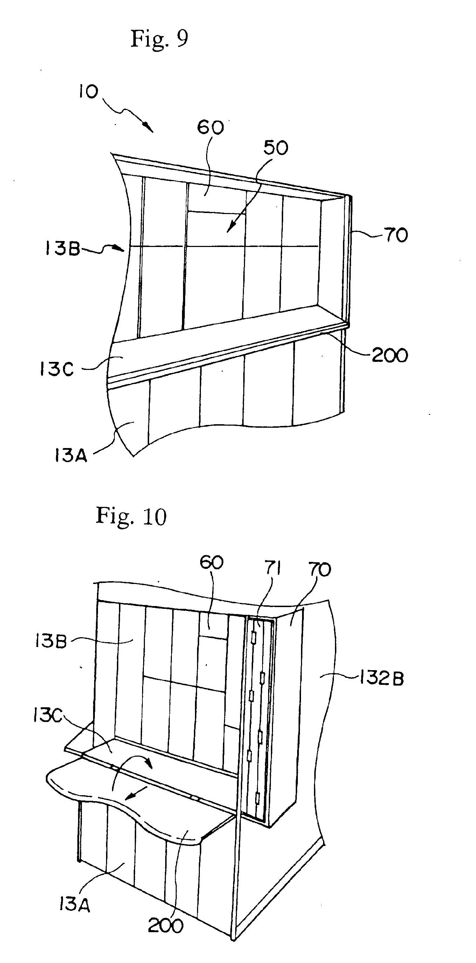

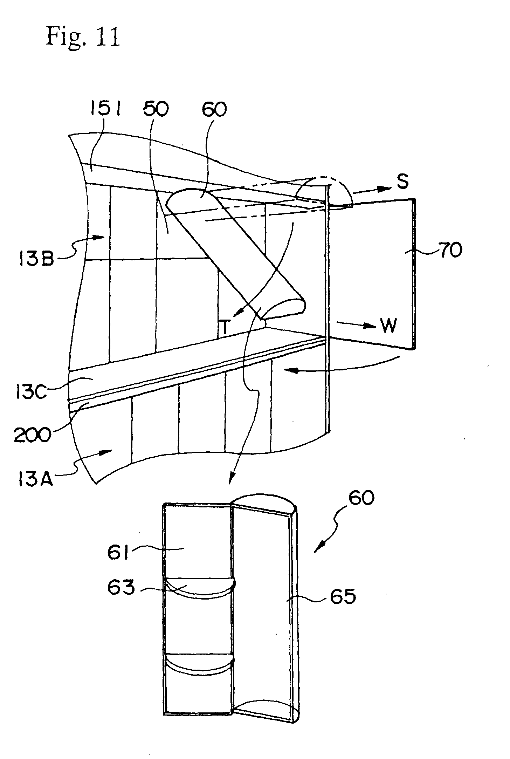

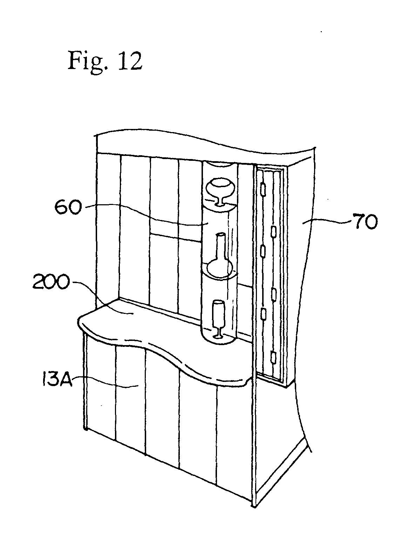

FIG. 9 is a perspective view of the front surface of the galley unit 10, and FIGS. 10 through 12 are explanatory view of the structure.

The upper closet 13B of the galley unit 10 is equipped with a plurality of storage compartments. In one of a block 50 of the upper close 13B, there is stored a cabinet 60 as a decorating member horizontally to the depth direction of the upper closet 13B. The decorating members, compartment surfaces and the like are construed from fireproof material required for a general interior decoration.

The cabinet 60 is comprised of a base plate 61, a plurality of shelves 63 projecting to the base plate 61, and a cover portion 65 for covering these, and is pulled out from the storage in the direction vertical to the wall surface, in the arrow S direction. Next, by rotating to the direction in parallel to the wall surface, in the arrow T direction, the cabinet 60 could be arranged along the wall surface of the upper closet 13B. The cabinet 60 is connected to the inner wall of the closet when storing the same. Also, by having the composition of connecting the upper end of the base plate 61 of the cabinet 60 to the end portion of the upper closet 13B, the cabinet 60 could be fixed to the upper closet 13B surface, so that dropping of the cabinet from tilting or vibrating of the aircraft body could be prevented.

Moreover, by composing the cover portion 65 of the cabinet 60 with a transparent body, the decorating effect is improved when glasses, bottles or the like are placed on top of inner shelves 63, so that presentation as a utility space could be achieved.

Also, the counter 13C projecting vertically from the wall surface is provided between the lower closet 13A and the upper closet 13B. Furthermore, a space is formed between the counter 13C and the lower closet 13A, and a counter board 200 is inserted thereto. The counter board 200 is made of outer walls having decorating effect. When providing utility function to the galley unit 10, the counter board 200 is pulled out in arrow V direction along the counter 13C. By resting the counter 200 on top of the counter 13C, the counter 13C corrupted from use could be covered with the counter 200 so that decorating effect could be improved. Also, by providing lighting equipments to the eaves portion 151 of the ceiling 15, effect as a utility space could be improved. Obviously, the counter board 200 is fixed to the closet or the counter by a suitable fixing method when stored or rested on the counter.

A cover board 70 is stored in another side wall 132B of the upper closet 13B.

The cover board 70 is construed from a board with its outer surface made from special fireproof material. A plurality of cover boards 70 is connected with a plurality of connectors 71 such as a hinge or the like, so as to be foldable. One cover board 70 pulled out and connected has the composition of having the length covering the front surface of the upper closet 13B.

When the function as the second utility space is finished, the cabinet 60 is stored inside the compartment 50 of the upper closet 13B, and the counter board 200 is stored in the space between the lower closet 13A and the counter 13C. Then, cover boards 70 are pulled out in the arrow W direction, so as to cover between the ceiling 15 and the counter 13C (the cover board is in the first position).

The galley unit 10 shown in the present example covers the front surface of the galley unit 10 by arranging the cover boards 70 with its outer walls made of special fireproof material in the first position, under fireproof regulation during takeoff and landing. When using the galley unit as a kitchen facility, it could be used normally by opening and storing the cover boards 70 to the side surface (the cover boards are in the second position). Also, when providing a utility function, the counter board 200 is pulled out and rested on the counter 13C, and the cabinet 60 is pulled out and provided to the upper closet 13B surface.

As is mentioned above, the galley unit 10 shown in the present example uses half of the peripheral edge of the galley unit as a counter portion, and also to provide decorating member or as a decorating wall surface. Also, all of the wall surfaces are covered with covering members such as the door and the cover board and the like made of special fireproof material at outer surfaces thereof during takeoff and landing, so that regulations for aircrafts could be satisfied.

The galley unit 10 could provide new service without decreasing passenger seats or other spaces.

The galley unit of the present invention could form a utility space while satisfying the regulations of the flightworthy examination procedure of an aircraft, as well as without decreasing the space of the passenger seats or increasing the overall weight.

## Claims

1. A galley unit for an aircraft configuring a storage space for kitchenware inside a box body formed from ceiling surface and a plurality of wall surfaces with the outer wall surfaces of the both made of a special fireproof material, including:
a utility mechanism provided to at least one wall surface of the box body; and
a covering body for covering the wall surface provided with said utility mechanism: wherein
said cover body is made of a special fireproof material at least at outer walls thereof, and is composed so as to be movable between a first position for covering the wall surface provided with said utility mechanism, and a second position for opening said wall surface, so that all of the outer wall surfaces of said galley unit are composed of special fireproof material when said cover body is located in said first position.

2. A galley unit for an aircraft according to claim 1, wherein said utility mechanism is a counter equipment, a decorative wall, and/or a decorative member.

3. A galley unit for an aircraft according to claims 1 or 2, wherein said utility mechanism has the composition of being in a position to be stored inside the storage space of said box body when said cover is located in said first position, and moved and arranged on a wall surface when said cover is located in said second position.

4. A galley unit for an aircraft according to claim 2, wherein said counter equipment is composed so as to be foldable.

5. A galley unit for an aircraft according to claim 1, wherein said cover body is composed so as to be folded and stored to a side wall surface on said box body side, when said cover body is located in said second position.
